# EUROPÄISCHE PATENTANMELDUNG

(11) **EP 0 822 066 A2**
(43) Veröffentlichungstag der Anmeldung: **04.02.1998**
(21) Anmeldenummer: 97118256.3
(22) Anmeldetag: 02.02.1994
(51) Int. Cl.: B41C 1/055, B41C 1/14

(54) **Verfahren und Vorrichtung zur Herstellung einer Siebdruckschablone**

(62) Teilanmeldung aus: 94101572.9
(71) Anmelder: Schablonentechnik Kufstein Aktiengesellschaft, 6330 Kufstein (AT)
(72) Erfinder: Rückl, Siegfried, 6322 Langkampfen (AT)
(74) Vertreter: TER MEER STEINMEISTER & PARTNER GbR

(57) **Zusammenfassung**

Zur Herstellung einer Siebdruckschablone (1) wird eine auf der Oberfläche eines sich drehenden Siebdruckzylinders (1a) liegende Lackschicht (63) mittels eines wenigstens annähernd radial auf den Siebdruckzylinder (1a) auftreffenden und in dessen Axialrichtung bewegten Strahls (19) punktweise bestrahlt. Der Siebdruckzylinder (1a) wird nur im Bereich seiner sich gegenüberliegenden Stirnseiten abgestützt, während er über wenigstens eine dieser Stirnseiten durch ein Druckgas von bis zu 20.000 Pa so stark aufgeblasen wird, daß er einen kreisrunden Querschnitt erhält.

## Beschreibung

Die Erfindung betrifft ein Verfahren sowie eine Vorrichtung zur Herstellung einer Siebdruckschablone gemäß den Oberbegriffen der Patentansprüche 1 und 4.

Aus der DE 36 01 327 A1 ist es bereits bekannt, zur Bildung einer dünnen Siebdruckschablone, insbesondere für den Textildruck, einen z. B. galvanoplastisch hergestellten und äußerst dünnwandigen Siebdruckzylinder aus z. B. reinem Nickel zu verwenden, der eine Vielzahl kleiner Durchtrittsöffnungen aufweist. Dieser gleichmäßig perforierte Siebdruckzylinder trägt auf seiner äußeren Oberfläche eine dünne Lackschicht, die seine Durchtrittsöffnungen verschließt. Um ein gewünschtes Druckmuster zu erhalten, wird in einem eigenen Arbeitsgang die Oberfläche des Siebdruckzylinders bereichsweise freigelegt, und zwar durch Abtragen der auf ihr liegenden Lackschicht. Bei diesem Arbeitsgang wird ein Laser verwendet, der entweder den Lack an den freizulegenden Stellen abbrennt bzw. abdampft oder einen anders gearteten lichtempfindlichen bzw. photopolymerisierbaren Lack durch Intensive Belichtung vorvernetzt oder polymerisiert. Auch gibt es Lacke, deren Kohäsionsvermögen durch intensive Lichteinwirkung so weit geschädigt wird, daß sie durch eine anschließende chemische Nachbehandlung von den belichteten Stellen abgetragen werden können.

Der Laserstrahl wird auf die Lackschicht fokussiert und sehr rasch ein- und ausgeschaltet, oft bis zu einigen Millionen mal in der Sekunde, wobei er gleichzeitig relativ zur Lackoberfläche verschoben wird, so daß die kleinen Fokusflecke in der Summe ihrer Belichtungsergebnisse das gewünschte Muster der Siebdruckschablone hervorbringen.

Üblicherweise rotiert die Siebdruckschablone relativ schnell, beispielsweise mit 1.500 Umdrehungen pro Minute, wobei gleichzeitig der Fokusfleck des auf den Siebdruckzylinder wenigstens annähernd radial auftreffenden Laserstrahls in Axialrichtung des Siebdruckzylinders verschoben wird, so daß sich der Fokusfleck auf der Oberfläche des Siebdruckzylinders entlang einer Schraubenlinie bewegt. Die Steigung der Schraubenlinie entspricht etwa dem Durchmesser des Fokusflecks oder ist geringfügig kleiner. Der gesamte Prozeß wird durch einen schnellen Computer gesteuert, dem Umfangs- und Achsposition des Fokusflecks durch Abfrage entsprechender Sensoren jeweils bekannt sind, so daß die Einzelbelichtungen richtig zu einem Gesamtmuster aufaddiert werden.

Der auf seiner Oberfläche die Lackschicht tragende Siebdruckzylinder wird zum Zwecke der Bemusterung auf einen expandierbaren, genau rundlaufenden Spannzylinder geschoben, was jedoch relativ umständlich ist. Sollen darüber hinaus Siebdruckzylinder mit unterschiedlichem Durchmesser bearbeitet werden, so ist es bei größeren Durchmesserabweichungen auch erforderlich, den relativ schweren und unhandlichen Spannzylinder zu wechseln.

Aus der DE 29 02 902 A1 ist es ferner bekannt, eine Siebdruckschablone dadurch herzustellen, daß auf ein mit einem lichtempfindlichen Photolack beschichtetes metallisches Zylindersieb ein Film aufgelegt wird, durch den hindurch der Photolack belichtet wird. Das metallische Zylindersieb wird an seinen beiden Stirnseiten durch Zentrierflansche gelagert, die gemeinsam mit dem Zylindersieb einen Druckraum bilden, in den ein Druckmedium eingeleitet wird, um das Zylindersieb durch Druckbeaufschlagung zu spannen. Danach wird der bereits erwähnte Film auf die Außenfläche des so behandelten Zylindersiebs gelegt und belichtet. Der Grund für das Spannen des Zylindersiebs liegt darin, dessen Eigenstabilität zu erhöhen, die üblicherweise nicht ausreicht, wenn auf der Außenseite des Zylinders eine Oberflächenbearbeitung vorgenommen wird, beispielsweise eine mechanische oder photographische Dessinierung. Für solche Arbeiten ist eine relativ hohe Formstabilität erforderlich.

Der Erfindung liegt die Aufgabe zugrunde, das Verfahren sowie die Vorrichtung der eingangs genannten Art so weiterzubilden, daß eine einfachere Handhabung des Siebdruckzylinders möglich ist, und zwar ohne Einbuße der Gravurqualität.

Die verfahrensseitige Lösung der gestellten Aufgabe findet sich im kennzeichnenden Teil des Patentanspruchs 1. Dagegen steht die vorrichtungsseitige Lösung der gestellten Aufgabe im kennzeichnenden Teil des Patentanspruchs 4. Vorteilhafte Ausgestaltungen der Erfindung sind den jeweils nachgeordneten Unteransprüchen zu entnehmen.

Untersuchungen im Zusammenhang mit dem Rundlauf dünner metallischer Zylindersiebe haben zu dem überraschenden Ergebnis geführt, daß es trotz innerer Materialspannungen, die z. B. bei einer galvanischen Herstellung dünnwandiger Nickelschablonen mehr oder weniger zufällig auftreten, möglich ist, diese Zylindersiebe durch geeigneten Innendruck so exakt kreisrund auszuformen. Statische Formabweichungen des Siebdruckzylinders lassen sich somit weitestgehend kompensieren.

Kommt das erfindungsgemäße Verfahren zum Einsatz, so vereinfacht sich darüber hinaus die Handhabung des Siebdruckzylinders ganz erheblich, da er jetzt nicht mehr auf eine Schablonenspannwalze aufgeschoben zu werden braucht und die Montage der Schablonenspannwalze selbst ebenfalls entfallen kann. Es ist nur noch erforderlich, den Siebdruckzylinder auf die Zentrierflansche zu setzen und mit Druckgas zu befüllen, was relativ schnell und bequem möglich ist.

Wie bereits erwähnt, weist die Gravurvorrichtung erfindungsgemäß zwei Zentrierflansche auf, von denen jeweils einer in eine der Stirnseiten des Siebdruckzylinders einführbar Ist. Der Siebdruckzylinder steht über einen Innenkanal in wenigstens einem der Zentrierflansche mit einem Gebläse in Verbindung, das einen solchen Gasdruck im Innern des Siebdruckzylinders erzeugt, daß dieser einen kreisrunden Querschnitt erhält.

Der Siebdruckzylinder kann aber auch über Innenkanäle in beiden Zentrierflanschen mit jeweils einem Gebläse in Verbindung stehen, so daß beidseitig Druckgas in ihn hineingeblasen werden kann.

Die Erfindung wird nachfolgend unter Bezugnahme auf die Zeichnung näher beschrieben. Es zeigen:
**Figur 1** ein Ausführungsbeispiel einer Vorrichtung zur Herstellung einer Siebdruckschablone,
**Figur 2** den Detailaufbau der Vorrichtung nach Figur 1 am linken stirnseitigen Ende der Siebdruckschablone, und
**Figur 3** den Detailaufbau der Vorrichtung nach Figur 1 am rechten stirnseitigen Ende der Siebdruckschablone.

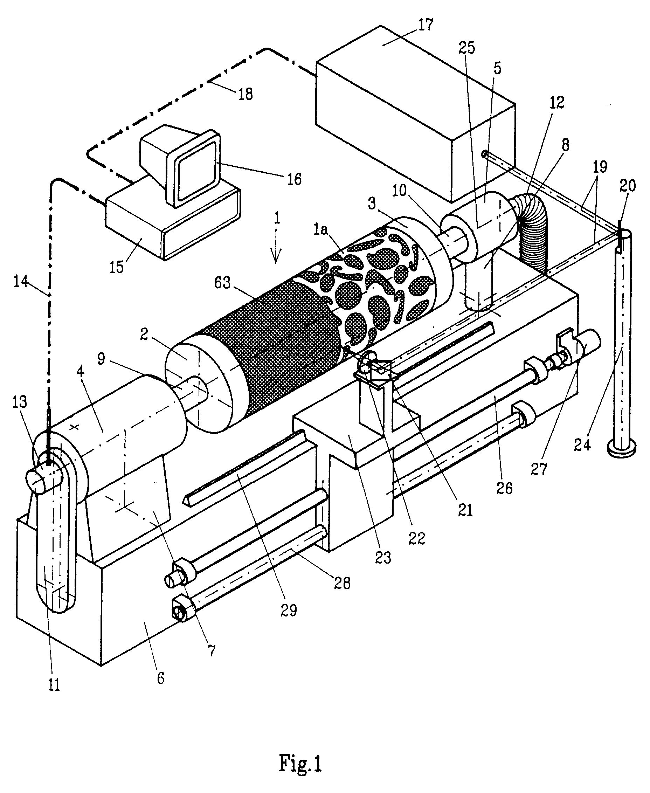

Die Figur 1 zeigt eine perspektivische Ansicht einer erfindungsgemäßen Vorrichtung zur Herstellung einer Siebdruckschablone.

Die Siebdruckschablone trägt das Bezugszeichen 1 und wird an ihren einander gegenüberliegenden Stirnseiten durch jeweils einen Spannkopf 2 bzw. 3 gehalten, die als Zentrierflansche ausgebildet sein können. Diese Spannköpfe 2, 3 sind jeweils in einer Lagerschale 4, 5 drehbar gelagert. Die Lagerschalen 4, 5 stützen sich auf einem Maschinenbett 6 ab, und zwar über Stützeinrichtungen 7, 8.

Ein mit dem linken Spannkopf 2 verbundener Hohlwellenabschnitt 9 erstreckt sich in die Lagerschale 4 und ist dort drehbar gelagert. Dieser Hohlwellenabschnitt 9 wird über einen Antriebsstrang in Drehung versetzt, der durch die Stützeinrichtung 7 hindurchläuft bis zu einem Antriebsmotor, der im Maschinenbett 6 angeordnet ist. Bei Drehung des Hohlwellenabschnitts 9 wird durch ihn der Spannkopf 2 mitgenommen, so daß die Siebdruckschablone 1 dadurch in Drehung versetzt wird. Der andere Spannkopf 3 läuft frei um und ist über einen Hohlwellenabschnitt 10 in der Lagerschale 5 gelagert.

Beide Hohlwellenabschnitte 9 und 10 enden im Bereich der Spannköpfe 2 bzw. 3, erstrecken sich also nicht in die Siebdruckschablone 1 hinein, und sind ferner an ihren den Spannköpfen 2, 3 abgewandten Enden dicht mit Strömungskanälen 11 und 12 verbunden.

Ein mit dem freien Ende des Hohlwellenabschnitts 9 verbundener Drehwinkelgeber 13 informiert über eine Steuerleitung 14 einen Rechner 15 mit zugehörigem Monitor 16 über die jeweilige Drehlage der Siebdruckschablone 1. Dabei gibt der Rechner 15 entsprechende Ein- bzw. Ausschaltimpulse an einen Laser 17 über eine Steuerleitung 18. Ein Laserstrahl 19 des Lasers 17 wird entsprechend dieser Ein- bzw. Ausschaltimpulse emittiert oder nicht emittiert. Über einen ersten Umlenkspiegel 20 wird der Laserstrahl 19 einem zweiten Umlenkspiegel 21 zugeleitet, der gemeinsam mit einer Fokussierungslinse 22 auf einem bewegbaren Schlitten 23 montiert ist. Der bewegbare Schlitten 23 stütz sich, wie noch erläutert wird, indirekt am Maschinenbett 6 ab, das beispielsweise auf dem Boden steht, ebenso wie ein Ständer 24 zur Halterung des ersten Umlenkspiegels 20.

Im Bereich zwischen dem ersten Umlenkspiegel 20 und dem zweiten Umlenkspiegel 21 verläuft der Laserstrahl 19 parallel zur Längsachse 25 der Siebdruckschablone 1 und wird durch den zweiten Umlenkspiegel 21 so abgelenkt, daß er wenigstens annähernd radial auf den Siebdruckzylinder 1a zuläuft. Dabei wird er durch die Fokussierungslinse 22 auf die Lackschicht 63 fokussiert.

Der bewegbare Schlitten 23 ist in Richtung der Längsachse 25 der Siebdruckschablone 1 verschiebbar. Diese Verschiebung wird durch eine Spindel 26 und einen diese Spindel antreibenden Motor 27 bewirkt. Eine Rundführung 28 und eine Prismenführung 29 sorgen für eine zur Längsachse 25 der Siebdruckschablone 1 genau parallele Bewegung des Schlittens 23. Dabei befindet sich die Prismenführung 29 auf der oberen Fläche des Maschinenbetts 6, während die Spindel 26 und die Rundführung 28 an der Vorderseite des Maschinenbetts 6 parallel zueinander angeordnet sind.

Wie noch genauer beschrieben wird, befinden sich innerhalb des Maschinenbetts 6 Gebläse, von denen jeweils eines mit einem der Strömungskanäle 11 und 12 verbunden ist. Durch diese Gebläse läßt sich ein Druckgas über die Strömungskanäle 11, 12, die Hohlwellenabschnitte 9, 10 und die Spannköpfe 2, 3 ins Innere der Siebdruckschablone 1 blasen.

Vorzugsweise ist der Motor 27 zum Antrieb der Spindel 26 ein Schrittmotor, so daß sich durch die Ansteuerimpulse für den Schrittmotor 27 auch die Axialposition des auf den Siebdruckzylinder 1a auftreffenden Laserstrahls 19 bestimmen läßt.

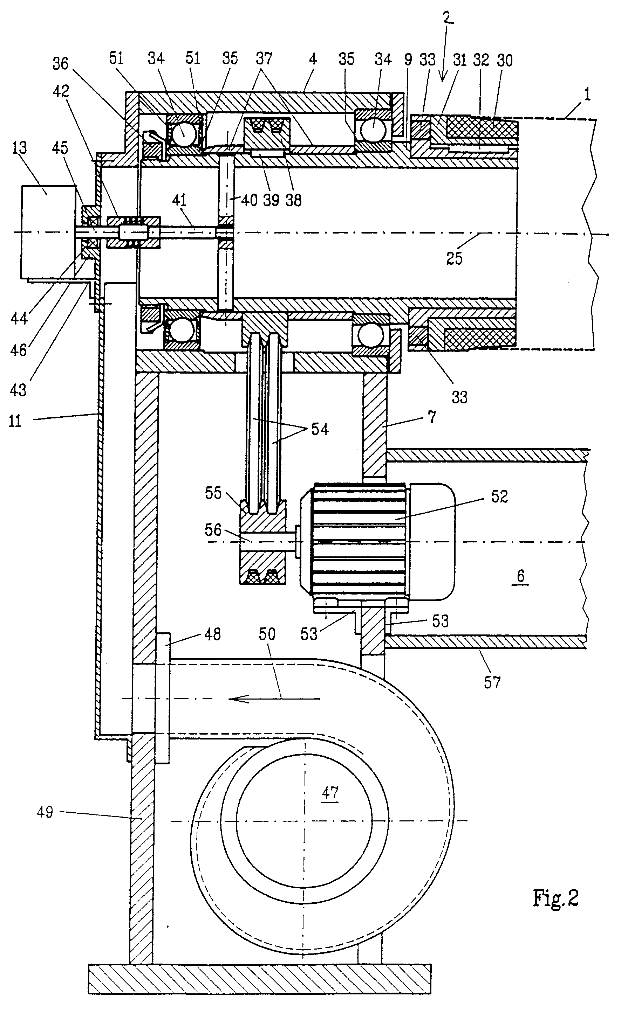

Die Figur 2 zeigt in detallierterer Ausführung den Aufbau der Gravurvorrichtung nach Figur 1 im Bereich des dort linksseitigen Endes des Siebdruckzylinders 1a. Dieser Bereich kann auch als spindelstockseitiger Bereich der Gravurvorrichtung bezeichnet werden. Gleiche Elemente wie in Figur 1 sind mit den gleichen Bezugszeichen versehen.

Die Siebdruckschablone 1 ist mit ihrem linken Ende auf einen zum Spannkopf 2 gehörenden und leicht konischen Mitnehmerring 30 aufgeschoben. Der Mitnehmerring 30 ist austauschbar und zu diesem Zweck mit einer Hülse 31 unlösbar verbunden, die ihrerseis mit einer Paßfederverbindung 32 vom Hohlwellenabschnitt 9 aufgenommen wird. Magnete 33 halten die Hülse 31 in axialer Richtung fest. Der Hohlwellenabschnitt 9 ist über Kugellager im Spindelstockgehäuse 4 (Lagerschale) drehbar abgestützt. Die Kugellager 34 werden mit ihren Innenringen 35 mittels einer Nutmutter 36 und Distanzhülsen 37 gegen den Hohlwellenabschnitt 9 verspannt. Eine Keilriemenantriebsscheibe 38 ist zwischen den Distanzhülsen 37 vorgesehen, wobei eine Paßfeder 39 für die Übertragung eines Antriebsmoments auf den Hohlwellenabschnitt 9 sorgt. Ein Mitnehmerbolzen 40, der durch eine Querbohrung des Hohlwellenabschnitts 9 mit diesem drehsteif verbunden ist, treibt über eine Welle 41 und eine Ausgleichskupplung 42 den Drehwinkelgeber 13 an. Dieser stützt sich auf einem Winkelteil 43 ab, welches an der Seite des Strömungskanals 11 montiert Ist. Ein Wellendichtring 44 sorgt für einen dichten Abschluß des aus dem Drehwinkelgeber 13 herausragenden Wellenschafts 45. Der Wellendichtring 44 befindet sich in einer Wand 46, die einen Wandabschnitt des Strömungskanals bildet, der zwischen dem Strömungskanal 11 und dem Hohlwellenabschnitt 9 liegt.

Über den Strömungskanal 11 an der linken Außenseite des Maschinenbetts 6 bzw. der Stützeinrichtung 7 wird verdichtete Luft aus einem Gebläse 47 zur linken Stirnseite des Hohlwellenabschnitts 9 transportiert und durch diesen hindurch in die Siebdruckschablone 1 geleitet. Das Gebläse 47 liefert Luft mit einem Druck von bis zu 20.000 Pa, und dies in einer so großen Menge, daß trotz eines Austritts dieser Luft aus den Öffnungen der Siebdruckschablone 1, die während der Gravurarbeit freigelegt werden, der Druck innerhalb der Schablone ausreichend hoch bleibt. Dabei befindet sich das Gebläse 47 im Innern bzw. unterhalb des Maschinenbetts 6 und ist über einen Flansch 48 mit der Maschinenbett-Seitenwand 49 verbunden. Der Pfeil 50 gibt die Strömungsrichtung der Luft an.

Damit im Bereich der Kugellager 34 kein Druckverlust auftritt, können diese abdichtende Seitenwände 51 besitzen.

Der bereits erwähnte Motor trägt das Bezugszeichen 52 und ist auf einer Trägereinrichtung 53 innerhalb des Maschinenbetts 6 montiert. Dieser Motor 52 treibt über Keilriemen 54, die die Keilriemenantriebsscheibe 38 umschlingen, den Hohlwellenabschnitt 9 an. Dabei laufen die Keilriemen auch um eine weitere Keilriemenscheibe 55 herum, die auf der Welle 56 des Motors 52 sitzt.

Ein Kastenträger 57 verbindet das linke Ende der Gravurvorrichtung mit ihrem rechten Ende. Dabei ist der Querschnitt des Kastenträgers 57 so groß ausgebildet, daß die Gravurvorrichtung eine ausreichende Steifigkeit und eine geringe Schwingungsanfälligkeit aufweist.

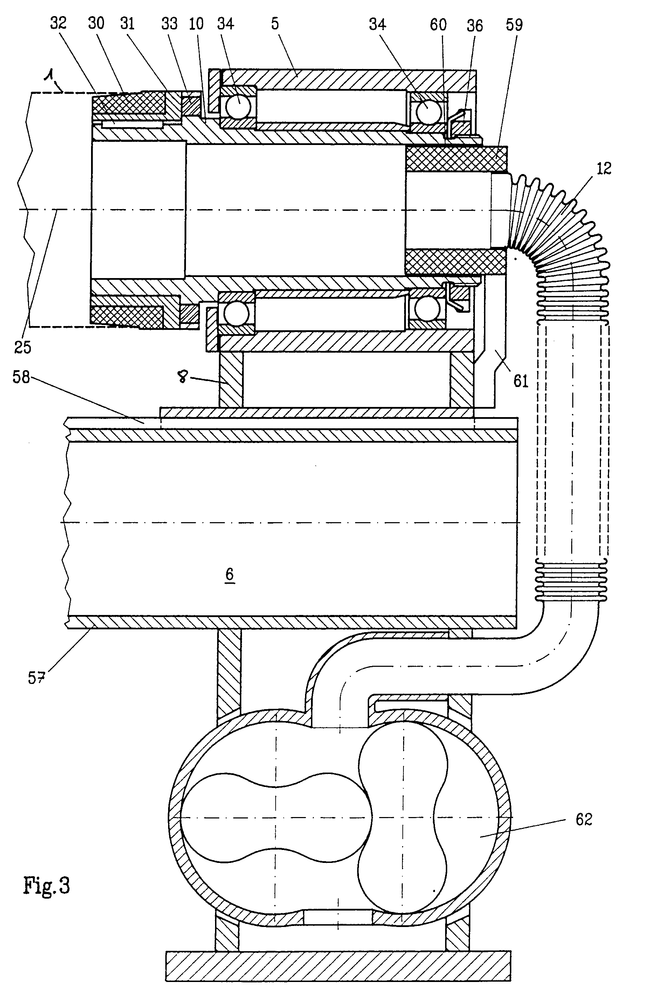

Die Figur 3 zeigt einen Schnitt durch das rechte, reitstockseitige Ende der Gravurvorrichtung nach Figur 1. Gleiche Teile wie in Figur 1 und 2 sind wiederum mit den gleichen Bezugszeichen versehen.

Der Reitstock 5 (rechte Lagerschale) kann auf Führungen 58 verschoben werden, die auf dem Maschinenbett 6 bzw. Kastenträger 57 liegen und sich parallel zur Längsachse 25 erstrecken. Beim Aufrüsten der Graviervorrichtung wird der Reitstock 5 so weit gegen die Siebdruckschablone 1 geschoben, daß der konische Mitnehmerring 30 fest in der Siebdruckschablone 1 sitzt. Mit einer nicht mehr dargestellten Klemmeinrichtung wird der Reitstock 5 im Bereich seiner Stützeinrichtung 8 gegen die Führungen 58 bzw. den Kastenträger 57 verspannt, so daß während des Betriebs ein Lockern und ein Verrutschen des Reitstocks 5 nicht möglich ist. Luft unter erhöhtem Druck wird auf dieser Seite der Siebdruckschablone 1 über eine Gleitdrehdurchführung 59 zugeführt, die mittels eines langen und dünnen Spalts 60 gegen den Hohlwellenabschnitt 10 abgedichtet ist. Der nicht drehbare Teil der Gleitdrehdurchführung 59 wird von einem Halter 61 getragen, der fest mit dem Reitstock 5 bzw. der Stützeinrichtung 8 verbunden ist. Von einem Drehkolbengebläse 62 (Roots-Gebläse) wird Luft über einen langen flexiblen Schlauch 12 dem Innenraum der Siebdruckschablone 1 zugeführt, und zwar durch die Gleitdrehdurchführung 59 und den Hohlwellenabschnitt 10 hindurch. Für die Druckluftversorgung werden hier zweckmäßigerweise Ringkammer-, Wasserring oder Drehkolbengebläse eingesetzt.

## Patentansprüche

1. Verfahren zur Herstellung einer Siebdruckschablone (1), bei dem eine auf der Oberfläche eines sich drehenden Siebdruckzylinders (1a) liegende Lackschicht (63) mittels eines wenigstens annähernd radial auf den Siebdruckzylinder (1a) auftreffenden und in dessen Axialrichtung bewegten Strahls (19) punktweise bestrahlt wird, **dadurch gekennzeichnet,** daß
- der Siebdruckzylinder (1a) nur im Bereich seiner sich gegenüberliegeden Stirnseiten abgestützt und
- über wenigstens eine dieser Stirnseiten durch ein Druckgas von bis zu 20.000 Pa so stark aufgeblasen wird, daß er einen kreisrunden Querschnitt erhält.

2. Verfahren nach Anspruch 1, **dadurch gekennzeichnet,** daß Druckgas über beide Stirnseiten in den Siebdruckzylinder (1a) hineingeblasen wird.

3. Verfahren nach Anspruch 1 oder 2, **dadurch gekennzeichnet,** daß als Druckgas Luft verwendet wird.

4. Vorrichtung zur Herstellung einer Siebdruckschablone mit:
- einer Einspannvorrichtung zum drehbaren Einspannen eines Siebdruckzylinders (1a), der auf seiner Oberfläche eine lichtempfindliche Lackschicht (63) trägt, und
- einem parallel zur Längsrichtung des Siebdruckzylinders (1a) bewegbaren Schlitten (23) mit einer Einrichtung (22), die einen Strahl wenigstens annähernd radial auf den Siebdruckzylinder (1a) auftreffen läßt, **dadurch gekennzeichnet,** daß
- die Einspannvorrichtung aus nur zwei Zentrierflanschen (2, 3) besteht, von denen jeweils einer in eine der Stirnseiten des Siebdruckzylinders (1a) einführbar ist, und
- der Siebdruckzylinder (1a) über einen Innenkanal (9, 10) in wenigstens einem der Zentrierflansche (2, 3) mit einem Gebläse (47, 62) verbunden ist, das unter einem Druck von bis zu 20.000 Pa stehendes Gas in einer so großen Menge liefert, daß der Siebdruckzylinder (1a) einen kreisrunden Querschnitt beibehält.

5. Vorrichtung nach Anspruch 41, **dadurch gekennzeichnet,** daß der Siebdruckzylinder (1a) über Innenkanäle in beiden Zentrierflanschen (2, 3) mit jeweils einem Gebläse (47, 62) in Verbindung steht.
